# EUROPEAN PATENT APPLICATION

(11) **EP 4 636 930 A1**
(43) Date of publication of application: **22.10.2025**
(21) Application number: 25171053.9
(22) Date of filing: 16.04.2025
(51) Int. Cl.: H01M 50/449, H01M 50/451, H01M 50/446, H01M 50/42, H01M 50/417, H01M 50/434, H01M 50/457, H01M 50/443

(54) **SEPARATOR FOR RECHARGEABLE LITHIUM BATTERY AND RECHARGEABLE LITHIUM BATTERY INCLUDING THE SAME**

(30) Priority: 18.04.2024 KR 20240052035
(71) Applicant: SAMSUNG SDI CO., LTD., Yongin-si, Gyeonggi-do 17084 (KR)
(72) Inventor: Gu, Ja Yeon, 16678 Suwon-si, Gyeonggi-do, (KR)
(74) Representative: Gulde & Partner

(57) **Abstract**

The present disclosure relates to a separator for a rechargeable lithium battery, and a rechargeable lithium battery, and the separator that includes a porous substrate, and a coating layer on at least one surface of the porous substrate and including a binder and a filler. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler includes an organic filler and an inorganic filler. The organic filler includes a cross-linked polymer filler. The inorganic filler includes one or more of a first inorganic filler, which has an average particle size of 50 to 250 nm and is cubic, and a second inorganic filler, which has an average particle size of 100 to 350 nm and is amorphous.

## Description

### BACKGROUND

### 1. Field of the Disclosure

The present disclosure relates to a separator for a rechargeable lithium battery, and a rechargeable lithium battery including the separator.

### 2. Discussion of Related Art

With increasing presence of electronic devices, such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery typically includes a positive electrode and a negative electrode that include an active material capable of the intercalation and deintercalation of lithium ions, and produces electric energy by oxidation and reduction reactions when the lithium ions are intercalated into and deintercalated from the positive electrode and the negative electrode.

### SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery with an increased capacity of a rechargeable lithium battery having a low membrane resistance.

Another example embodiment includes a separator for rechargeable lithium battery that has a low thermal shrinkage rate, thereby increasing the stability and lifetime of the rechargeable lithium battery.

Still another example embodiment includes a rechargeable lithium battery including the separator.

### BRIEF DESCRIPTION OF THE DRAWINGS

FIG. 1 is an enlarged cross-sectional view of a cubic first inorganic filler.
FIG. 2 is an enlarged cross-sectional view of an amorphous second inorganic filler.
FIG. 3 is a conceptual diagram of a separator for a rechargeable lithium battery, according to one example embodiment.
FIG. 4 is a conceptual diagram of a separator for a rechargeable lithium battery, according to another example embodiment.
FIGS. 5 to 8 are cross-sectional views schematically illustrating rechargeable lithium batteries, according to example embodiments.

### DETAILED DESCRIPTION

Hereinafter, example embodiments of the present disclosure are described in detail. However, the embodiments are presented as examples, the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural.

In the present specification, "a combination thereof" may indicate a mixture, stack, composite, copolymer, alloy, blend, or reaction product of constituents.

Unless otherwise defined herein, a particle size is an average particle size. In addition, the particle size refers to an average particle size D50, which refers to a size of a particle with a cumulative volume of 50% by volume in a particle size distribution. The average particle size D50 may be measured by methods known to those skilled in the art and for example, may be measured using a particle size analyzer, a transmission electron microscope photograph, or a scanning electron microscope photograph. As another method, the average particle size D50 may be obtained by measuring the particle size using a measuring device using dynamic light scattering, performing data analysis to count the number of particles for each particle size range, and then calculating the average particle size D50 therefrom. Alternatively, the average particle size D50 may be measured using a laser diffraction method. When measuring the average particle size by the laser diffraction method, for example, the average particle size D50 based on 50% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of 28 kHz with an output of 60 W.

In the present specification, "(meth)acryl" refers to acryl and/or methacryl.

Hereinafter, unless otherwise defined, "substitution" indicates that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group (-NO₂), a cyano group (-CN), an amino group (-NRR') (here, R and R' are each independently hydrogen or a C1 to C6 alkyl group), a sulfobetaine group (-RR'N+(CH₂)ₙSO₃-, n is a natural number from 1 to 10), a carboxybetaine group (-RR'N+(CH₂)ₙCOO-, n is a natural number from 1 to 10) (here, R and R' are each independently a C1 to C20 alkyl group), an azido group (-N₃), an amidino group (-C(=NH)NH₂), a hydrazino group (-NHNH₂), a hydrazono group (=N(NH₂)), a carbamoyl group (-C(O)NH₂), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group (-SO₃H) or a salt thereof (-SO₃M, here, M denotes an organic or inorganic cation), and a phosphate group (-PO₃H₂) or a salt thereof (-PO₃MH or -PO₃M₂, here, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, a C3 to C10 cycloalkylene group, or a C5 to C10 alkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In the chemical formulas, the symbol * refers to a part that is connected to the same or different atom, group, or structural unit.

In this specification, the weight average molecular weight (Mw) may be a value measured using gel permeation chromatography (GPC).

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less (X≤ and ≤Y)."

A separator for a rechargeable lithium battery according to one example embodiment may exhibit low membrane resistance and a low shrinkage rate in an electrolyte, thereby increasing the capability, stability, and lifetime of the battery.

The separator for a rechargeable lithium battery includes a porous substrate, and a coating layer located on at least one surface of the porous substrate and including a binder and a filler. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler includes an organic filler and an inorganic filler. The organic filler includes a cross-linked polymer filler, and the inorganic filler may include one or more of a first inorganic filler, which has an average particle size of 50 nm to 250 nm and is cubic, and a second inorganic filler, which has an average particle size of 100 nm to 350 nm and is amorphous.

The separator for a rechargeable lithium battery may include the (meth)acryl-based binder to provide low membrane resistance. According to one example embodiment, the separator may have a membrane resistance of 0.6 Ω or less.

The separator for a rechargeable lithium battery may include the (meth)acryl-based binder, the inorganic filler, and the organic filler, thereby increasing the packing density in the coating layer and reducing a thermal shrinkage rate so that the heat resistance of the separator may be increased. According to one example embodiment, a mechanical direction (MD) shrinkage rate and transverse direction (TD) shrinkage rate of the separator may each be in a range of 3% or less, for example, 2% or less or 1.5% or less after being left at 150 °C for 1 hour. Within the above range, even when the battery is left at high temperature for a long time, the thermal shrinkage rate may be low, thereby increasing the stability and lifetime of the battery.

According to one example embodiment, the coating layer may be formed of or include a composition including a binder including the (meth)acryl-based binder and a filler including the inorganic filler and the organic filler.

According to one example embodiment, the coating layer may be or include a dried or cured product of the composition.

The coating layer includes a binder and a filler, which is described below.

### Binder

The binder may include a (meth)acryl-based binder to be described below in an amount in a range of 95 wt% or more, for example, ranging from 95 wt5 to 100 wt% or 100 wt%. Within the above range, the above effects of the separator can be readily realized.

The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof.

The (meth)acryl-based binder exhibits high heat resistance and low resistance. Therefore, when the (meth)acryl-based binder is applied to the coating layer of the separator, a rechargeable lithium battery with desired or improved lifetime characteristics at room temperature and/or high temperature can be implemented.

Description of the (meth)acryl-based binder is as follows.

Among 100 mol% of the (meth)acryl-based binder, the first structural unit may be included in an amount ranging from 30 mol% to 65 mol%, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65 mol%, from 40 to 65 mol%, or from 30 to 60 mol%. Within the above range, it is possible to improve the dispersibility of the binder in the coating layer and readily increase heat resistance.

The first structural unit may be derived from (meth)acrylic acid, (meth)acrylate, or a salt thereof to fix inorganic particles on the porous substrate, and may provide bonding strength so that the coating layer is bonded to the porous substrate and the electrode. In addition, the first structural unit may contribute to improving the heat resistance and air permeability of the separator. In addition, the first structural unit may include a carboxyl functional group (-C(=O)O-) in the structural unit, thereby contributing to improving the dispersibility of a coating slurry.

The first structural unit may be represented by any one or more of Chemical Formulas 1 to 3 below:

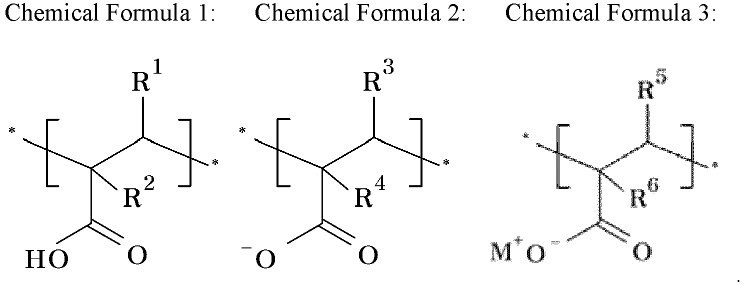

With respect to 100 mol% of the (meth)acryl-based binder, the second structural unit may be included in an amount ranging from 1 mol% to 20 mol% or 1, 2, 3, 4, 5, 6, 7, 8, 9, 10, 11, 12, 13, 14, 15, 16, 17, 18, 19, 20 mol%, from 5 to 15 mol%. Within the above range, it is possible to increase the bonding of the coating layer to the porous substrate.

The second structural unit may be derived from hydroxyalkyl (meth)acrylate to fix inorganic particles to the porous substrate, and may provide bonding strength so that the coating layer is bonded to the porous substrate and the electrode. In addition, the second structural unit may include a carboxyl functional group (-C(=O)O-) in the structural unit, thereby contributing to improving the dispersibility of a coating slurry.

The second structural unit may be represented by Chemical Formula 4 below:

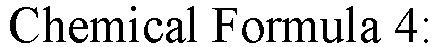

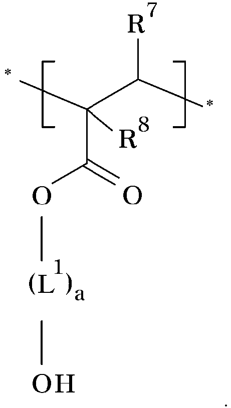

According to one example embodiment, with respect to 100 mol% of the (meth)acryl-based binder, the third structural unit may be included in a higher number of moles than the first structural unit and the second structural unit. This may increase the mobility of lithium ions in the coating layer, thereby making it possible to provide low membrane resistance.

According to one example embodiment, with respect to 100 mol% of the (meth)acryl-based binder, the third structural unit may be included in an amount ranging from 20 mol% to 65 mol%, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65 mol%, or from 30 to 60 mol%. Within the above range, the coating layer may reduce membrane resistance by increasing the mobility of lithium ions.

The third structural unit may include a bulky functional group derived from (meth)acrylamido sulfonic acid or a salt thereof, thereby increasing the heat resistance of the separator by increasing a glass transition temperature. Additionally, when the third structural unit includes a functional group derived from a salt of (meth)acrylamido sulfonic acid, a metal (M) may move through the third structural unit by the sulfonic acid functional group on which the metal (M) is substituted, thereby reducing resistance.

The third structural unit may be represented by any one or more of Chemical Formulas 5 to 7 below:

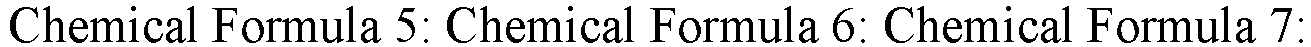

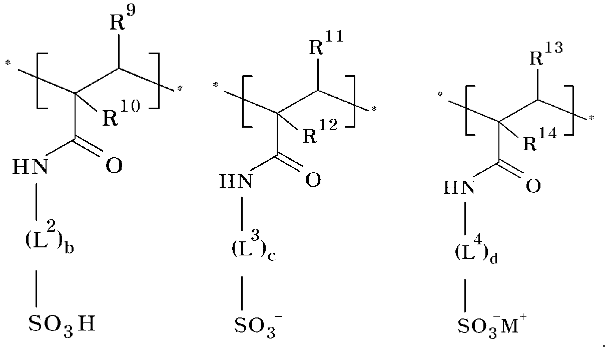

Descriptions of Chemical Formulas 1 to 7 are as follows.

R¹ to R¹⁴ may each independently be or include hydrogen or a C1 to C10 alkyl group, for example, a methyl group. For example, R¹ to R⁷ and R⁹ to R¹⁴ may each be or include hydrogen, and R⁸ may be a methyl group.

L¹ to L⁴ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, L¹ may be a methylene group or an ethylene group, and L² to L⁴ may each be independently *-C(CH₃)₂-CH₂-*.

a, b, c, and d may each be independently an integer ranging from 0 to 2. For example, a, b, c, and d may all be equal to 1.

M may be or include an alkali metal, and the alkali metal may be or include at least one of lithium, sodium, potassium, rubidium, or cesium. For example, M may be or include lithium or sodium.

Representative examples of the (meth)acryl-based binder according to one example embodiment are as follows:

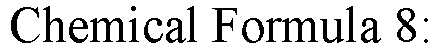

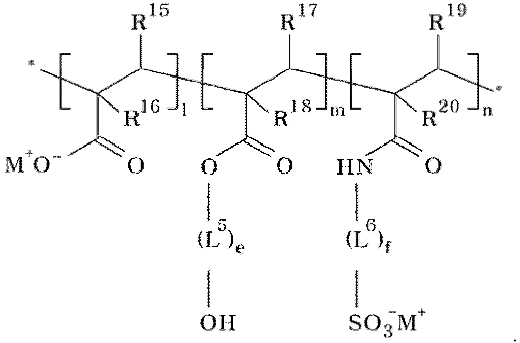

Description of Chemical Formula 8 is as follows.

R¹⁵ to R²⁰ may each independently be or include hydrogen or a C1 to C10 alkyl group, for example, a methyl group. For example, R¹⁵ to R¹⁷, R¹⁹, and R²⁰ may each be or include hydrogen, and R¹⁸ may be or include a methyl group.

L⁵ and L⁶ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, L⁵ may be or include a methylene group or an ethylene group, and L⁶ may be or include *-C(CH₃)₂-CH₂-*.

M may be or include an alkali metal, and the alkali metal may be or include at least one of lithium, sodium, potassium, rubidium, or cesium. For example, M may be or include lithium or sodium.

e and f may each be independently an integer ranging from 0 to 2. For example, e and f may both be equal to 1.

l, m, and n are a molar ratio of each unit, and may be l+m+n=1. For example, l, m, and n may satisfy 0.3≤l≤0.65, 0.01≤m≤0.2, and 0.2≤n≤0.65, or may be 0.3≤l≤0.6, 0.05≤m≤0.15, and 0.3<n<0.6.

The (meth)acryl-based binder may have a weight average molecular weight ranging from 100,000 g/mol to 1,000,000 g/mol, from 100,000 g/mol to 500,000 g/mol, from 100,000 g/mol to 150,000 g/mol, from 130,000 g/mol to 200,000 g/mol, or from 300,000 to 900,000 g/mol. When the above range is satisfied, a separator including a binder for a rechargeable lithium battery according to one example embodiment may exhibit desired or improved bonding strength and low resistance.

The (meth)acryl-based binder may include an alkali metal. The alkali metal may be present in the form of a cation and for example, may be or include at least one of lithium, sodium, potassium, rubidium, or cesium. For example, the alkali metal may be combined with the (meth)acryl-based binder and may be present in the form of a salt. The alkali metal may assist in the synthesis of the (meth)acryl-based binder in an aqueous solvent, increase the bonding strength of the coating layer, and increase the heat resistance, air permeability, oxidation resistance, and the like, of the separator.

The alkali metal may be included in an amount ranging from 1 wt% to 40 wt% of the alkali metal and the (meth)acryl-based binder, for example, from 1 wt% to 30 wt%, from 1 wt% to 20 wt%, or from 10 wt% to 20 wt%. For example, the (meth)acryl-based binder and the alkali metal may be included in a weight ratio in a range of 99:1 to 60:40, a weight ratio of 99:1 to 70:30, for example, a weight ratio of 99:1 to 80:20, or for example, a weight ratio of 90:10 to 80:20.

The alkali metal may be included in an amount ranging from 0.1 mol% to 1.0 mol% of the total content of the alkali metal and the (meth)acryl-based binder. When the alkali metal is included within the above range, the coating layer can have a desired or improved bonding strength, and a separator including the coating layer may exhibit desired or improved heat resistance, air permeability, and oxidation resistance.

The (meth)acryl-based binder may be in various forms, such as an alternating polymer in which the units are alternately distributed, a random polymer in which the units are randomly distributed, or a graft polymer in which some structural units are grafted.

According to one example embodiment, the (meth)acryl-based binder may be prepared by a solution polymerization method.

### Filler

The filler includes an organic filler and an inorganic filler, and the inorganic filler includes one or more of a first inorganic filler, which has an average particle size D50 ranging from 50 nm to 250 nm and is cubic, and a second inorganic filler, which has an average particle size D50 ranging from 100 nm to 350 nm and is amorphous.

The organic filler includes a cross-linked polymer filler. The cross-linked polymer filler may reduce a moisture content, thereby further reducing the thermal shrinkage rate of the separator and improving insulation properties. The cross-linked polymer filler may be included in a combination of the (meth)acryl-based binder and the inorganic filler, thereby making it possible to reduce the thermal shrinkage rate of the separator.

According to one example embodiment, the cross-linked polymer filler may be included in an amount in a range of 95 wt% or more, for example, ranging from 95 wt% to 100 wt% or 100 wt% of the organic filler. Within the above range, the above effects of the separator can be readily realized.

The organic filler may be highly cross-linked, thereby increasing heat resistance and reducing or suppressing the shrinkage of the porous substrate at high temperature. According to one example embodiment, the organic filler may include at least one of an acrylate-based compound or a derivative thereof, a diallyl phthalate-based compound or a derivative thereof, a polyimide-based compound or a derivative thereof, and a polyurethane-based compound or a derivative thereof. For example, the organic filler may be or include cross-linked polymethyl methacrylate particles. The organic filler may be prepared by conventional methods known to those skilled in the art. The cross-linked polymer filler may be prepared by adding a cross-linking agent in a monomer polymerization process.

The organic filler may have a particle size D50 ranging from 0.1 µm to 0.35 µm, for example, 0.1 µm to 0.2 µm. Within the above range, the thickness of the separator may be reduced by forming a coating layer with a uniform thickness.

The organic filler may be included in a desired content with respect to the binder, for example, the (meth)acryl-based binder. According to one example embodiment, the (meth)acryl-based binder and the organic filler may be included in a mass ratio of 1:1 to 1: 10, for example, 1: 1 to 1:5. Within the above range, it is possible to realize heat resistance, durability and low resistance effects.

The inorganic filler includes one or more of the first inorganic filler and the second inorganic filler.

According to one example embodiment, one or more of the first inorganic filler and the second inorganic filler may be included in an amount in a range of 95 wt% or more, for example, ranging from 95 wt% to 100 wt% or 100 wt% of the inorganic filler. Within the above range, the above effects of the separator can be readily realized.

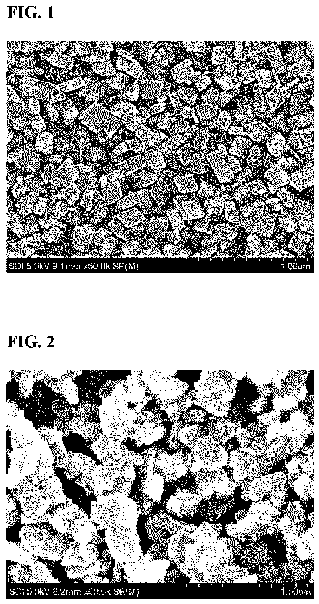

FIG. 1 is an enlarged cross-sectional view of a cubic first inorganic filler. Referring to FIG. 1, the cubic inorganic filler may have a three-dimensional shape in which each substantially an entire surface forming the inorganic filler has a rectangular or square shape.

FIG. 2 is an enlarged cross-sectional view of an amorphous second inorganic filler. Referring to FIG. 2, the amorphous inorganic filler has a non-uniform and irregular surface forming the filler.

The first inorganic filler and the organic filler may increase coating density by ensuring that there are substantially no uncoated portions when the porous substrate is coated with a composition including the binder. In addition, since the first inorganic filler has a low average particle size and a low specific surface area, the moisture content is low. Therefore, it can be advantageous in reducing the thermal shrinkage rate of the separator. The first inorganic filler can be advantageous in increasing coating density when the average particle size D50 is 50 nm or more and may increase coating density and reduce the thermal shrinkage rate when the average particle size D50 is 250 nm or less. For example, the first inorganic filler may have an average particle size D50 ranging from 100 nm to 250 nm, for example, from 150 nm to 250 nm or 200 nm.

The second inorganic filler and the organic filler may increase coating density by ensuring that there are substantially no uncoated portions when the porous substrate is coated with a composition including the binder. Therefore, it can be advantageous in reducing the thermal shrinkage rate of the separator. The second inorganic filler can be advantageous in increasing coating density when the average particle size D50 is in a range of 100 nm or more, and may increase coating density and reduce the thermal shrinkage rate when the average particle size D50 is in a range of 300 nm or less. For example, the second inorganic filler may have an average particle size D50 ranging from 150 nm to 350 nm, for example, from 200 nm to 350 nm or 300 nm.

For example, the coating layer may include a combination of the organic filler and the first inorganic filler, in which case the thermal shrinkage rate may be further reduced.

According to one example embodiment, the (meth)acryl-based binder and the one or more of the first inorganic filler and the second inorganic filler may be included in a mass ratio of 1:10 to 1:50, for example, 1:20 to 1:30. Within the above range, it is possible to realize heat resistance, durability and low resistance effects.

According to one example embodiment, a specific surface area of each of the organic filler and the inorganic filler may be in a range of 30 m²/g or less, for example, may range from 1 m²/g to 30 m²/g. Here, the "specific surface area" is a Brunauer-Emmett-Teller (BET) specific surface area.

According to one example embodiment, among a total of 100 parts by weight of the organic filler and the inorganic filler in the coating layer, the organic filler and the inorganic filler may be included in an amount of 10 to 80 parts by weight : 20 to 90 parts by weight, for example, 10 to 40 parts by weight : 60 to 90 parts by weight, or 10 to 30 parts by weight : 70 to 90 parts by weight. Within the above range, the ratio can be advantageous in reducing resistance and a thermal shrinkage rate.

The first inorganic filler and the second inorganic filler may each be or include a ceramic material.

According to one example embodiment, the first inorganic filler and the second inorganic filler may each include, for example, at least one of a metal oxide, a metalloid oxide, a metal fluoride, a metal hydroxide, or a combination thereof. The first inorganic filler and the second inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto. For example, the first inorganic filler and the second inorganic filler may be or include the same ceramic such as, e.g., cubic or amorphous boehmite.

The filler, that is, the first inorganic filler alone, the second inorganic filler alone, or the total of the first inorganic filler and the second inorganic filler may be included in an amount ranging from 50 wt% to 99 wt% of the total amount of the coating layer, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, for example, from 95 wt% to 99 wt%. When the filler is included within the above range, the separator may exhibit desired or improved heat resistance, durability, oxidation resistance, and stability.

Each coating layer may have a thickness ranging from 0.01 µm to 20 µm, from 0.1 µm to 10 µm, from 0.1 µm to 5 µm, or from 0.5 µm to 2 µm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator can exhibit desired or improved air permeability, heat resistance, bonding strength, and the like. Herein, "thickness of the coating layer" indicates a thickness of one coating layer when the coating layer is formed on only one surface of the porous substrate, and indicates a thickness of two coating layers when the coating layer is formed on both surfaces of the porous substrate.

### Porous substrate

The porous substrate may be a substrate having multiple pores and commonly included in electrochemical devices. The porous substrate may be or include a polymer membrane formed of any one polymer such as or including at least one of a polyolefin such as or including at least one of polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. For example, the polyolefin-based resin may include a non-olefin resin in addition to an olefin resin or include a copolymer of olefin and non-olefin monomers.

The porous substrate may have a thickness ranging from 1 µm to 40 µm, for example, from 1 µm to 30 µm, from 1 µm to 20 µm, or from 5 µm to 15 µm.

The separator for a rechargeable lithium battery according to one example embodiment may exhibit desired or improved air permeability and may have an air permeability value in a range of, for example, less than 200sec/100 cc, for example, 190sec/100 cc or less, or 180 sec/100 cc or less. For example, the separator may have an air permeability value in a range of less than 40 sec/100 cc·1 µm per unit thickness, for example, 30sec/100 cc·1 µm or less or 25 sec/100 cc·1 µm or less. Herein, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using an air permeability measurement device (EG01-55-1MR, Asahi Seiko Co., Ltd.).

The separator for a rechargeable lithium battery according to one example embodiment may be formed by applying a composition for forming a coating layer on one surface, or on both surfaces, of the porous substrate, drying, and then curing the composition. The drying may be performed using, e.g., conventional methods known to those skilled in the art.

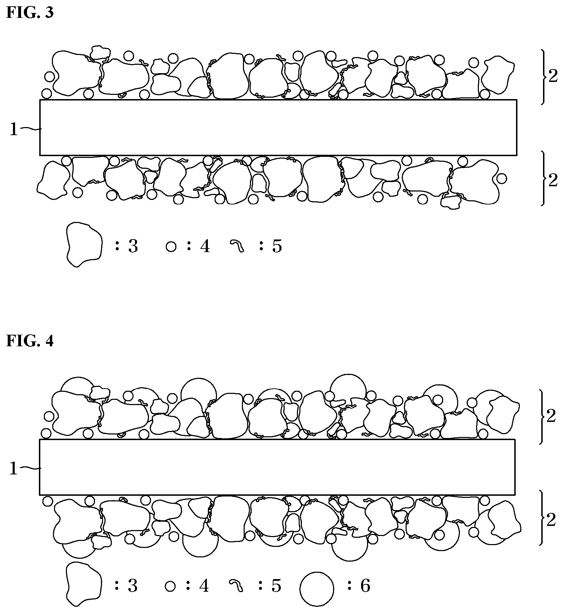

FIG. 3 is a cross-sectional view illustrating a separator for a rechargeable lithium battery, according to one example embodiment.

Referring to FIG. 3, the separator for a rechargeable lithium battery includes a porous substrate 1 and a coating layer 2 located on both surfaces of the porous substrate 1. The coating layer 2 may include an inorganic filler 3, an organic filler 4, and a (meth)acryl-based binder 5.

The coating layer may further include an adhesive binder.

### Adhesive binder:

The adhesive binder is configured to achieve the bonding strength between the separator and the electrode. The adhesive binder can maintain the heat resistance and bonding strength of the separator, increase battery stability and lifetime when included in a subsequent battery, and reduce the resistance of the battery.

The adhesive binder may include one or more of a (meth)acryl-based binder and a fluorine-based binder.

According to one example embodiment, the adhesive binder may include a (meth)acryl-based binder including a structural unit derived from (meth)acrylic acid or (meth)acrylate. In addition to the (meth)acryl-based binder, the adhesive binder may further include a binder having a structural unit derived from a monomer including a polymerizable unsaturated group.

According to one example embodiment, the adhesive binder is a particle having a core-shell structure, in which the core may include a (meth)acryl-based binder including a structural unit derived from (meth)acrylic acid or (meth)acrylate, and the shell may include a binder having a structural unit derived from a monomer including a polymerizable unsaturated group.

The structural unit derived from (meth)acrylic acid or (meth)acrylate may be or include at least one of Chemical Formulas 9, 10, below and a combination thereof:

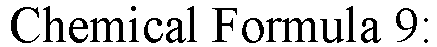

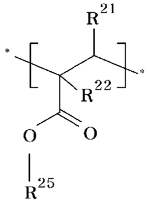

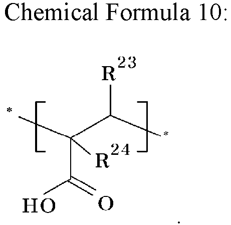

In Chemical Formulas 9 and 10,
R²¹ to R²⁴ may each be or include independently hydrogen or a C1 to C10 alkyl group, for example, a methyl group. For example, R²¹ and R²³ may each be or include hydrogen, and R²² and R²⁴ may be or include hydrogen or a methyl group.
R²⁵ may be or include a C1 to C20 alkyl group, for example, a C1 to C10 alkyl group, for example, a methyl group.

The (meth)acrylic acid or (meth)acrylate may include at least one of (meth)acrylic acid alkyl ester, (meth)acrylic acid perfluoroalkyl ester, or (meth)acrylate having a functional group in the side chain, for example, may be or include (meth)acrylic acid alkyl ester. In (meth)acrylic acid alkyl ester, (meth)acrylic acid perfluoroalkyl ester, or (meth)acrylate having a functional group in the side chain, the number of carbons of the alkyl group present in the ester portion ranges from 1 to 20, for example, from 1 to 10 or from 1 to 5.

The monomer including the polymerizable unsaturated group may include one or more of a styrene-based monomer, an acid monomer, and a combination thereof.

The styrene-based monomer may include at least one aromatic vinyl-based monomer represented by Chemical Formula 11 below:

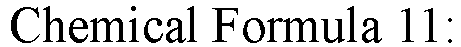

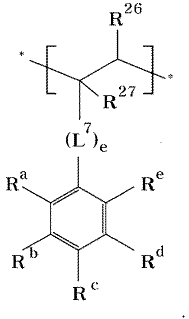

In Chemical Formula 11,
R²⁶ and R²⁷ each independently is or includes hydrogen or a C1 to C6 alkyl group,
R^{a} to R^{e} each independently is or includes hydrogen, a C1 to C6 alkyl group, or a halogen,
L⁷ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and e is an integer ranging from 0 to 2, and * is a connection point.

For example, the styrene-based monomer may be or include not only styrene, but also at least one of methyl styrene, bromo styrene, chloro styrene, and a combination thereof.

The acid-derived monomer includes a substituent corresponding to -COOH and may be or include at least one of itaconic acid, (meth)acrylic acid, and a combination thereof.

The adhesive binder may be cross-linked and not cross-linked. To prepare the cross-linked (meth)acryl-based polymer, a cross-linking agent may be further added during a polymerization process.

According to another example embodiment, the adhesive binder may be or include a fluorine-based binder.

The fluorine-based binder may include a vinylidene fluoride-based derived unit. The fluorine-based binder may include the vinylidene fluoride-based derived unit and other monomer-derived units. For example, the fluorine-based binder may include a vinylidene fluoride-derived unit, and one or more of units derived from chlorotrifluoroethylene, trifluoroethylene, hexafluoropropylene, ethylene tetrafluoride, and an ethylene monomer. For example, the fluorine-based binder may include at least one of a polyvinylidene fluoride homopolymer, a polyvinylidene fluoride-hexafluoropropylene copolymer, or a combination thereof.

According to one example embodiment, the adhesive binder may have an average particle size D50 ranging from 0.1 µm to 0.6 µm, for example, from 0.2 µm to 0.5 µm. Within the above range, the adhesive binder may be included in the coating layer.

According to one example embodiment, the (meth)acryl-based binder and the adhesive binder may be included in a weight ratio of 1:0.1 to 1:3 in the coating layer. Within the above range, it is possible to increase bonding strength.

FIG. 4 is a cross-sectional view illustrating a separator for a rechargeable lithium battery, according to another example embodiment. Referring to FIG. 4, the separator for a rechargeable lithium battery includes a porous substrate 1 and a coating layer 2 located on both surfaces of the porous substrate 1. The coating layer 2 may include an inorganic filler 3, an organic filler 4, a (meth)acryl-based binder 5, and an adhesive binder 6.

### Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be located between the positive electrode and the negative electrode.

### Positive electrode

A positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can be configured as a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤ 1.8, 0≤b≤0.5, 0≤c≤0.5, and 0<α<2); LiₐNi_{b}Co_{c}L¹₄GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

Al may be included as the current collector, but is not limited thereto.

### Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as at least one of non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other, and to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more.

In addition, when using a carbonate-based solvent, a cyclic carbonate and a chain carbonate may be mixed, and the cyclic carbonate and the chain carbonate may be mixed in a volume ratio of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

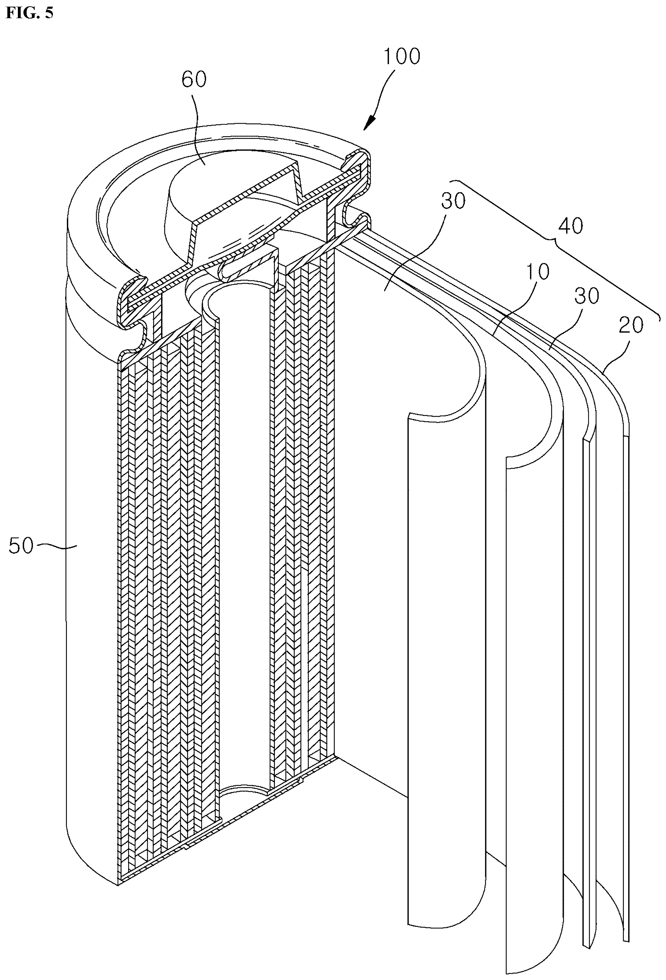

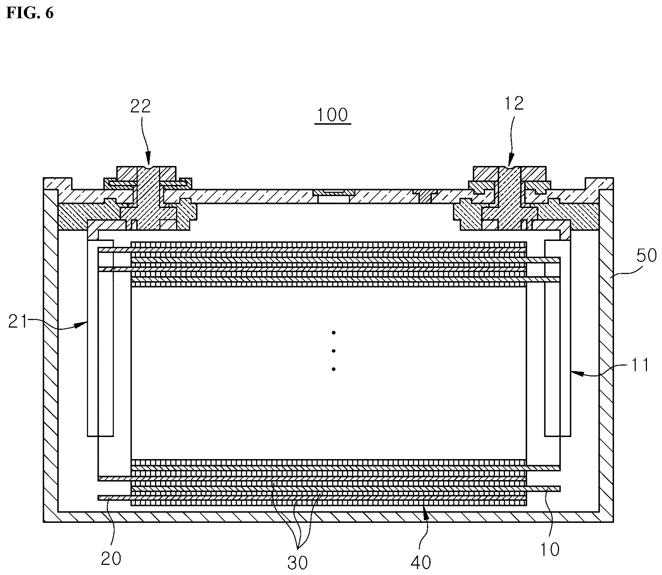

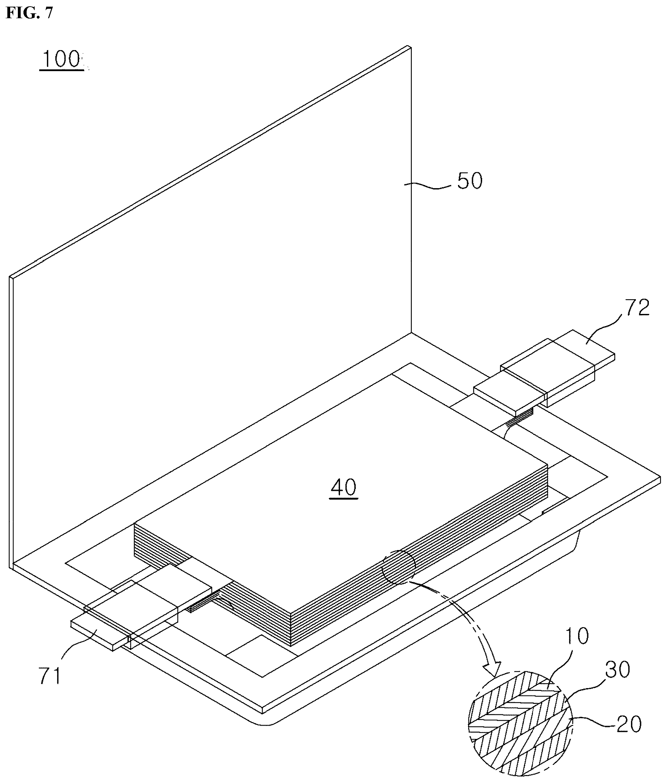

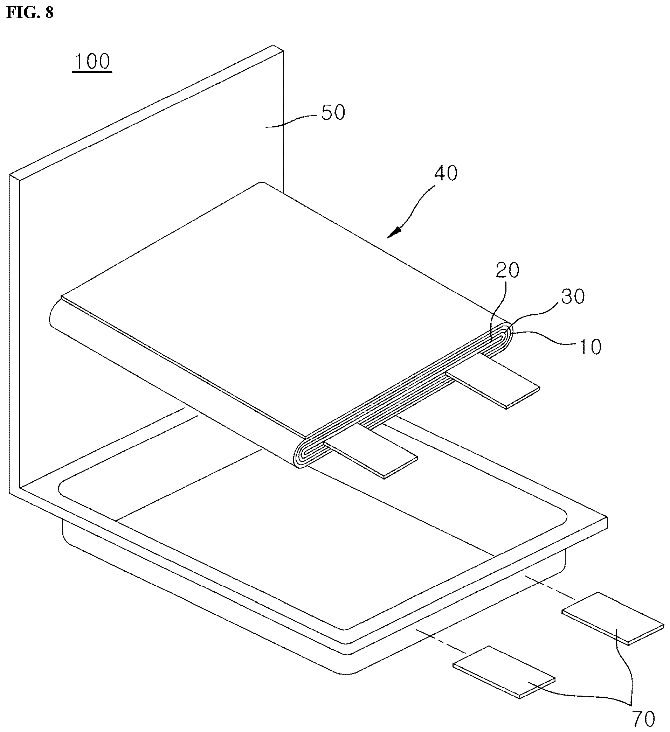

FIGS. 5 to 8 are schematic views illustrating rechargeable lithium batteries, according to example embodiments. FIG. 5 illustrates a cylindrical battery, FIG. 6 illustrates a prismatic battery, and FIGS. 7 and 8 illustrate pouch-type batteries. Referring to FIGS. 5 to 8, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 5. In FIG. 6, the rechargeable lithium battery 100 may include a positive lead tab 11, a positive terminal 12, a negative lead tab 21, and a negative terminal 22. As shown in FIGS. 7 and 8, the rechargeable lithium battery 100 may include an electrode tab 70 illustrated in FIG. 8, or, for example, a positive electrode tab 71 and a negative electrode tab 72 illustrated in FIG. 7, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are only embodiments of the present disclosure , and the present disclosure is not limited to the following examples.

### Synthesis Example 1: Poly(acrylic acid-co-2-hydroxyethyl methacrylate-co-2-acrylamido-2-methylpropane sulfonic acid) lithium salt (30:10:60)

In a 3 L four-necked flask provided with a stirrer, a thermometer, and a cooling tube, a process of adding distilled water (1249.72 g), a 20% aqueous lithium hydroxide solution (203.69 g, 1.05 equivalents of the total amount of acrylic acid and *2-acrylamido*-2-methylpropane sulfonic acid), acrylic acid (21.60 g, 0.30 mol), 2-hydroxyethyl methacrylate (13.00 g, 0.10 mol), 2-acrylamido-2-methylpropane sulfonic acid (124.30 g, 0.6 mol), and ammonium persulfate (0.2 g, 0.001 mol), then reducing an internal pressure to 10 mmHg using a diaphragm pump, and returning the internal pressure to a normal pressure using nitrogen was repeated three times.

The reaction was carried out for 12 hours while controlling the temperature of the reaction solution to be stable between 65 °C and 70 °C.

After cooling to room temperature, a non-volatile component (NV) in about 10 mL of the reaction solution was measured, and the measurement result was 9.8 wt% (theoretical value: 10 wt%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 30:10:60.

### Synthesis Example 2: Poly(acrylic acid-co-2-hydroxyethyl methacrylate-co-2-acrylamido-2-methylpropane sulfonic acid) lithium salt (40:10:50)

An acryl-based binder was prepared in the same method as in Synthesis Example 1, with a difference that acrylic acid (28.80 g, 0.40 mol), 2-hydroxyethyl methacrylate (13.00 g, 0.10 mol), and 2-acrylamido-2-methylpropane sulfonic acid (103.60 g, 0.5 mol) were used.

The non-volatile component of the reaction solution was 9.7 % (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 40:10:50.

### Synthesis Example 3: Poly(acrylic acid-co-2-hydroxyethyl methacrylate-co-2-acrylamido-2-methylpropane sulfonic acid) lithium salt (60:10:30)

An acryl-based binder was prepared in the same method as in Synthesis Example 1, with a difference that acrylic acid (43.20 g, 0.60 mol), 2-hydroxyethyl methacrylate (13.00 g, 0.10 mol), and 2-acrylamido-2-methylpropane sulfonic acid (62.20 g, 0.30 mol) were used.

The non-volatile component of the reaction solution was 9.7 % (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid is 60:10:30.

### Synthesis Example 4: Poly(acrylic acid-co-2-hydroxyethyl methacrylate-co-2-acrylamido-2-methylpropane sulfonic acid) lithium salt (40:5:55)

An acryl-based copolymer was prepared in the same method as in Synthesis Example 1, with a difference that acrylic acid (28.80 g, 0.40 mol), 2-hydroxyethyl methacrylate (6.500 g, 0.05 mol), and 2-acrylamido-2-methylpropane sulfonic acid (114.00 g, 0.55 mol) were used.

The non-volatile component of the reaction solution was 9.8 wt% (theoretical value: 10wt%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 40:5:55.

### Synthesis Example 5: Poly(acrylic acid-co-2-hydroxyethyl methacrylate-co-2-acrylamido-2-methylpropane sulfonic acid) lithium salt (40:15:45)

An acryl-based copolymer was prepared in the same method as in Synthesis Example 1, with a difference that acrylic acid (28.80 g, 0.40 mol), 2-hydroxyethyl methacrylate (19.50 g, 0.15 mol), and 2-acrylamido-2-methylpropane sulfonic acid (93.30 g, 0.45 mol) were used.

The non-volatile component of the reaction solution was 9.8 % (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 40:15:45.

### Comparative Synthesis Example 1: Poly(acrylic acid-co-2-acrylamido-2-methylpropane sulfonic acid) lithium salt (35:65)

An acryl-based copolymer was prepared in the same method as in Synthesis Example 1, with a difference that acrylic acid (25.20 g, 0.35 mol) and 2-acrylamido-2-methylpropane sulfonic acid (134.70 g, 0.65 mol) were used.

The non-volatile component of the reaction solution was 9.7 % (theoretical value: 10%). In addition, in the poly(acrylic acid-co-2-acrylamido-2-methylpropane sulfonic acid) lithium salt acquired here, a molar ratio of the first structural unit derived from acrylic acid and the third structural unit derived from 2-acrylamido-2-methylpropane sulfonic acid was 35:65.

### Comparative Synthesis Example 2: Poly(acrylic acid-co- acrylonitrile -co-2-acrylamido-2-methylpropane sulfonic acid) lithium salt (45:50:5)

In a 3 L four-necked flask provided with a stirrer, a thermometer, and a cooling tube, a process of adding distilled water (968 g), a 20% aqueous lithium hydroxide solution (102 g, 0.8 equivalents of the total amount of acrylic acid and 2-methylpropane sulfonic acid), acrylic acid (54.00 g, 0.62 mol), ammonium persulfate (0.65 g, 2.85 mmol), and 2-acrylamido-2-methylpropane sulfonic acid (6.00 g, 0.02 mol), then reducing an internal pressure to 10 mmHg using a diaphragm pump, and returning the internal pressure to a normal pressure using nitrogen was repeated three times, and then acrylonitrile (60.00 g, 0.94 mol) was added.

The reaction was carried out for 18 hours while controlling the temperature of a reaction solution to be stable between 65 °C and 70 °C, and after adding ammonium persulfate (0.22 g, 0.95 mol) for the second time, the temperature was raised to 80 °C, and the reaction was carried out for another 4 hours.

After cooling to room temperature, the pH of the reaction solution was adjusted to 7 to 8 using a 25% aqueous ammonia solution. A non-volatile component (NV) in about 10 mL of the reaction solution was measured, and the measurement result was 9.8 wt% (theoretical value: 10%). In addition, in the poly(acrylic acid-co-acrylonitrile-co-2-acrylamido-2-methylpropane sulfonic acid) lithium salt acquired here, a molar ratio of the structural unit derived from acrylic acid, the structural unit derived from acrylonitrile, and the structural unit derived from 2-acrylamido-2-methylpropane sulfonic acid was 45:50:5.

### Comparative Synthesis Example 3: Poly(acrylamide-co-2-acrylamido-2-methylpropane sulfonic acid) lithium salt (95:5)

In a 10 L four-necked flask provided with a stirrer, a thermometer, and a cooling tube, a process of adding distilled water (6361 g), acrylamide (675.3 g, 9.5 mol), potassium persulfate (2.7 g, 0.01 mol), 2-acrylamido-2-methylpropane sulfonic acid (103.6 g, 0.5 mol), and a 5N lithium hydroxide aqueous solution (1.05 equivalents of the total amount of 2-acrylamido-2-methylpropane sulfonic acid), then reducing an internal pressure to 10 mmHg using a diaphragm pump, and returning the internal pressure to a normal pressure using nitrogen was repeated three times.

The reaction was carried out for 12 hours while controlling the temperature of the reaction solution to be stable between 65 °C and 70 °C. After cooling to room temperature, the pH of the reaction solution was adjusted to 7 to 8 using a 25% aqueous ammonia solution.

A non-volatile component in about 10 mL of the reaction solution (reaction product) was measured and the measurement result was 9.5% (theoretical value: 10%). In addition, in the poly(acrylamide-co-2-acrylamido-2-methylpropane sulfonic acid) lithium salt acquired here, a molar ratio of the structural unit derived from acrylamide and the structural unit derived from 2-acrylamido-2-methylpropane sulfonic acid was 95:5.

### Example 1

A dispersion was prepared by dispersing an aqueous binder solution (10 wt% in distilled water) including the binder of Synthesis Example 1, boehmite (cubic, average particle size D50=0.2 µm, specific surface area: 16 m²/g), and cross-linked polymethyl methacrylate (PMMA) (spherical, average particle size D50=0.15 µm, specific surface area: 18 m²/g) in water and then milling and dispersing the aqueous binder solution at 25 °C for 30 minutes using a bead mill. A composition for a coating layer was prepared by adding water so that the total solid content was 20 wt%.

The binder : boehmite weight ratio of the composition for a coating layer was 1:20, and the binder : cross-linked PMMA weight ratio was 1:3.

A separator was manufactured by coating both surfaces of a 5.5 µm thick polyethylene porous substrate (CZMZ Company, air permeability: 110 sec/100 cc, puncture strength: 360 kgf) with the prepared composition for a coating layer and then drying the prepared composition at 70 °C for 10 minutes.

A positive electrode active material slurry was prepared by mixing LiNi_{0.75}Mn_{0.23}Al_{0.02}O₂ as a positive electrode active material, polyvinylidene fluoride as a binder, and acetylene black as a conductive material in a weight ratio of 96:3:1 and dispersing the mixture in N-methyl pyrrolidone.

A positive electrode was manufactured by coating the positive electrode active material slurry on a 15 µm thick Al foil, drying, and then rolling the positive electrode active material slurry at 100 °C.

As a negative electrode active material, a mixture of artificial graphite and Si-C composite in a weight ratio of 93:7 was used, and a negative electrode active material slurry was prepared by mixing the negative electrode active material, a styrene-butadiene rubber binder, and carboxymethyl cellulose in a weight ratio of 98:1:1 and dispersing the mixture. The Si-C composite used a core including artificial graphite and silicone particle and carbonyl pitch coated on a surface of the core.

A negative electrode was manufactured by coating the negative electrode active material slurry on a 10 µm thick Cu foil, drying, and then rolling the negative electrode active material slurry at 100 °C.

An electrode assembly jelly roll was manufactured by assembling the positive electrode, the negative electrode, and the manufactured separator. The jelly roll was inserted into a pouch, an electrolyte was injected, and then the pouch was vacuum sealed. Here, the electrolyte is 1M LiPF₆ dissolved in a non-aqueous organic solvent in which ethylene carbonate (EC) and ethylmethyl carbonate (EMC) are mixed in a volume ratio of 3:7.

The jelly roll inserted into the pouch was pre-charged to 50% of a state of charge (SOC) while applying a pressure of 250 kgf/cm² to the jelly roll and thermally softening the jelly roll at a temperature of 70 °C for 1 hour.

Subsequently, gas was removed from the pouch (degassing), and the jelly roll was charged at a constant current of 0.2 C rate at a temperature of 45 °C for 1 hour while applying a pressure of 200 kgf/cm² until a voltage reached 4.3 V, maintained at 4.3 V, and charged at a constant voltage until the current reached 0.05 C. Subsequently, a formation process was performed by repeating a discharge cycle at a constant current of 0.2 C 5 times until the voltage reached 3.0 V.

### Example 2

A separator for a rechargeable lithium battery and a rechargeable lithium battery were manufactured in the same manner as in Example 1, with a difference that the binder of Synthesis Example 2 was used instead of the binder of Synthesis Example 1.

### Example 3

A separator for a rechargeable lithium battery and a rechargeable lithium battery were manufactured in the same manner as in Example 1, with a difference that the binder of Synthesis Example 3 was used instead of the binder of Synthesis Example 1.

### Example 4

A separator for a rechargeable lithium battery and a rechargeable lithium battery were manufactured in the same manner as in Example 1, with a difference that the binder of Synthesis Example 4 was used instead of the binder of Synthesis Example 1.

### Example 5

A separator for a rechargeable lithium battery and a rechargeable lithium battery were manufactured in the same manner as in Example 1, with a difference that the binder of Synthesis Example 5 was used instead of the binder of Synthesis Example 1.

### Example 6

A dispersion was prepared by dispersing an aqueous binder solution (10 wt% in distilled water) including the binder of Synthesis Example 1, boehmite (amorphous, average particle size D50=0.3 µm, specific surface area: 18 m²/g), and cross-linked PMMA (spherical, average particle size D50=0.15 µm) in water and then milling and dispersing the aqueous binder solution at 25 °C for 30 minutes using a bead mill.

The binder : boehmite weight ratio of the dispersion was 1:20, and the binder : cross-linked PMMA weight ratio of the dispersion was 1:3.

A composition for a coating layer was prepared by adding water so that the total solid content was 20 wt%. A separator was manufactured by coating both surfaces of a 5.5 µm thick polyethylene porous substrate (CZMZ Company, air permeability: 110 sec/100 cc, puncture strength: 360 kgf) with the prepared composition for a coating layer and then drying the prepared composition at 70 °C for 10 minutes. A rechargeable lithium battery was manufactured in the same manner as in Example 1.

### Example 7

A dispersion was prepared by dispersing an aqueous binder solution (10 wt% in distilled water) including the (meth)acryl-based binder of Synthesis Example 1, boehmite (cubic, average particle size D50=0.2 µm, specific surface area: 16 m²/g), and cross-linked PMMA (spherical, average particle size D50=0.15 µm, specific surface area: 18 m²/g) in water and then milling and dispersing the aqueous binder solution at 25 °C for 30 minutes using a bead mill.

The binder : boehmite weight ratio of the dispersion was 1:20, and the binder : cross-linked PMMA weight ratio of the dispersion was 1:3.

A composition for a coating layer was prepared by adding an adhesive binder having a core-shell structure (core: polymethyl methacrylate, shell: polystyrene, particles, average particle size d50: 0.35 µm) to the dispersion and adding water so that the total solid content was 20 wt%.

The (meth)acryl-based binder : adhesive binder weight ratio of the composition for a coating layer was 1:0.1.

A separator was manufactured by coating both surfaces of a 5.5 µm thick polyethylene porous substrate (CZMZ Company, air permeability: 110 sec/100 cc, puncture strength: 360 kgf) with the prepared composition for a coating layer to thicknesses of 0.9 µm and 1.1 µm and then drying the prepared composition at 70 °C for 10 minutes. A rechargeable lithium battery was manufactured in the same manner as in Example 1.

### Example 8

A dispersion was prepared by dispersing an aqueous binder solution (10 wt% in distilled water) including the (meth)acryl-based binder of Synthesis Example 1, boehmite (cubic, average particle size D50=0.2 µm, specific surface area: 16 m²/g), and cross-linked PMMA (spherical, average particle size D50=0.15 µm, specific surface area: 18 m²/g) in water and then milling and dispersing the aqueous binder solution at 25 °C for 30 minutes using a bead mill.

The binder : boehmite weight ratio of the dispersion was 1:20, and the binder : cross-linked PMMA weight ratio of the dispersion was 1:3.

A composition for a coating layer was prepared by adding a polyvinylidene fluoride (PVDF)-based adhesive binder (particles, average particle size d50: 0.3 µm) to the dispersion and adding water so that the total solid content was 20 wt%.

The (meth)acryl-based binder : adhesive binder weight ratio of the composition for a coating layer was 1:0.1.

A separator was manufactured by coating both surfaces of a 5.5 µm thick polyethylene porous substrate (CZMZ Company, air permeability: 110 sec/100 cc, puncture strength: 360 kgf) with the prepared composition for a coating layer to thicknesses of 0.9 µm and 1.1 µm and then drying the prepared composition at 70 °C for 10 minutes. A rechargeable lithium battery was manufactured in the same manner as in Example 1.

### Comparative Example 1

A separator for a rechargeable lithium battery and a rechargeable lithium battery were manufactured in the same manner as in Example 1, with a difference that the binder of Comparative Synthesis Example 1 was used instead of the binder of Synthesis Example 1.

### Comparative Example 2

A separator for a rechargeable lithium battery and a rechargeable lithium battery were manufactured in the same manner as in Example 1, with a difference that the binder of Comparative Synthesis Example 2 was used instead of the binder of Synthesis Example 1.

### Comparative Example 3

A separator for a rechargeable lithium battery and a rechargeable lithium battery were manufactured in the same manner as in Example 1, with a difference that the binder of Comparative Synthesis Example 3 was used instead of the binder of Synthesis Example 1.

### Comparative Example 4

A separator and a rechargeable lithium battery were manufactured in the same manner as in Example 1, with a difference that the cross-linked PMMA was not used as an organic filler.

### Comparative Example 5

A separator and a rechargeable lithium battery were manufactured in the same manner as in Example 6, with a difference that the cross-linked PMMA was not used as an organic filler.

The separators according to Examples and Comparative Examples were evaluated by the following methods, and the evaluation results are shown in Table 1 below.

### (1) Coating density (units: g/cm²)

A thickness (a) and a unit weight (b) of a fabric before coating were measured. A coating thickness and weight were measured by measuring a total thickness (c) and unit weight (d) after coating. A coating density was measured by dividing the coating weight by the thickness.
Coating thickness (e)=c-a
Coating weight (f)=d-b
Coating Density=f/e

### (2) Air permeability (units: sec/100 cc)

Samples were manufactured by cutting a separator so that its cross-sectional area was 1 inch², and the time (seconds) it took for 100 cc of air to pass through the sample was measured using a densometer according to the ASTM D 726-94 test method. A difference between air permeability values of an uncoated polyethylene porous substrate and a separator after coating is referred to as △ air permeability.

### (3) Thermal shrinkage rate (units: %)

Samples were manufactured by cutting the separator into a size of 10 cm (mechanical direction, MD) x 10 cm (transverse direction, TD), and drawing a square with a size of 8 cm x 8 cm on surfaces on the samples, then putting the samples between pieces of paper or alumina powder, and leaving the samples in an oven at 150 °C for 1 hour.

Then, a shrinkage rate in each of the MD and the TD was calculated according to Equation 1 below by taking the samples out and comparing the samples with the previously drawn square with the size of 10 cm (mechanical direction, MD) x 10 cm (transverse direction, TD). Thermal shrinkage rate=(initial length-length after thermal shrinkage treatment)/(initial length):x100

### (4) Adhesiveness (units: gf)

A coating layer of the separator was brought into contact with the negative electrode active material layer of Example 1, and the separator and a negative electrode were bonded using a lamination device in a chamber at 60 °C. Therefore, samples were manufactured by cutting the laminate of the separator and the electrode into a predetermined size (width: 25 mm, length: 50 mm), and then a force required for peeling in a 180° direction was measured using a tension meter (Stable Micro System, TA-XT).

### (5) Membrane resistance when impregnated with electrolyte (units: Ω)

Membrane resistance was evaluated by electrochemical impedance spectroscopy (EIS) resistance. Samples were manufactured by cutting the separator into a size of 10 cm x 10 cm, the samples were impregnated with an electrolyte mixed solution of ethylene carbonate, ethyl methyl carbonate, and dimethyl carbonate (volume ratio of 2:1:7) in which 1.5M LiPF₆ was dissolved, test cells were manufactured by inserting the impregnated sample into a lead tab-attached aluminum foil electrode and sealing the impregnated sample in an aluminum pack, and a resistance (Ω) of the test cell was measured by an alternating impedance method (measurement frequency 100 kHz) at 20 °C.

### (6) Moisture content (units: ppm/g)

A moisture content was evaluated by taking the jelly roll out from the pouch and separating the separator. Here, the moisture content was measured according to the Karl-Fischer method.

### (7) Withstand voltage (units: kV)

For the lithium batteries of Examples and Comparative Examples, the insulation (breakdown voltage, BDV) of the separator was evaluated, and the results are shown in Table 1 below. The BDV was measured by placing the separator between stainless steel (SUS) plates and measuring a voltage at a point at which step-up was stopped (breakdown, short) while fixing a current to 0.3 mA in an alternative current (AC) mode and increasing a voltage at a step-up rate of 8 sec to 0.3 kV using KIKISUI's TOS5301.

**Table 1:**

| | (meth)acr yl-based binder | Inorgani c filler | Organ ic filler | Adhesi ve binder | Coati ng Densi ty | △ air permeabi lity | Therm al shrinka ge rate | Adhesiven ess | Membra ne resistan ce | Moist ure conten t | Withsta nd voltage |
|---|---|---|---|---|---|---|---|---|---|---|---|
| Example 1 | Synthesis Example 1 | Cubic | Cross linked PMM A | - | 1.44 | 13 | 2.0/1.8 | 18 | 0.4 | 891 | 1.53 |
| Example 2 | Synthesis Example 2 | Cubic | Cross linked PMM A | - | 1.78 | 12 | 2.3/ 1.7 | 19 | 0.45 | 941 | 1.6 |
| Example 3 | Synthesis Example 3 | Cubic | Cross linked PMM A | - | 1.79 | 13 | 2.3/ 2.5 | 20 | 0.48 | 950 | 1.62 |
| Example 4 | Synthesis Example 4 | Cubic | Cross linked PMM A | - | 1.68 | 11 | 1.8/ 2.0 | 19 | 0.42 | 885 | 1.57 |
| Example *5* | Synthesis Example *5* | Cubic | Cross linked PMM A | - | 1.73 | 12 | 2.5/ 2.0 | 19 | 0.47 | 912 | 1.59 |
| Example 6 | Synthesis Example 1 | Amorph ous | Cross linked PMM A | - | 1.4 | 13 | 2.7/ 2.5 | 19 | *0.55* | 963 | 1.71 |
| Example 7 | Synthesis Example 1 | Cubic | Cross linked PMM A | Core-shell | 1.73 | 14 | 2.3/ 2.1 | 26 | 0.51 | 905 | 1.65 |
| Example 8 | Synthesis Example 1 | Cubic | Cross linked PMM A | PVDF | 1.71 | 14 | 2.4/2.3 | 30 | 0.54 | 899 | 1.69 |
| Comparat ive Example 1 | Comparat ive Synthesis Example 1 | Cubic | Cross - linked PMM A | - | 1.66 | 12 | 3.5/ 3.0 | 15 | 0.61 | 1021 | 1.79 |
| Comparat ive Example 2 | Comparat ive Synthesis Example 2 | Cubic | Cross linked PMM A | - | 1.63 | 13 | 3.8/ 3.5 | 18 | 0.7 | 1018 | 1.85 |
| Comparat ive Example 3 | Comparat ive Synthesis Example 3 | Cubic | Cross linked PMM A | - | 1.58 | 11 | 3.7/ 3.7 | 21 | 0.7 | 1004 | 1.81 |
| Comparat ive Example 4 | Synthesis Example 1 | Cubic | - | - | 1.72 | 12 | 8.8/ 8.3 | 18 | *0.55* | 979 | 1.72 |
| Comparat ive Example *5* | Synthesis Example 1 | Amorph ous | - | - | 1.43 | 13 | 9.5/ 9.0 | 17 | 0.69 | 985 | 1.83 |

As shown in Table 1, the separator according to the Examples may exhibit low membrane resistance and a low thermal shrinkage rate, thereby increasing the capability, stability, and lifetime of the battery.

A separator for a rechargeable lithium battery according to one example embodiment can exhibit low membrane resistance and a low shrinkage rate in an electrolyte, thereby increasing the capability, stability, and lifetime of the battery.

## Claims

1. A separator (30) for a rechargeable lithium battery (100), the separator (30) comprising:
a porous substrate (1); and
a coating layer (2) on at least one surface of the porous substrate (1) and including a binder and a filler,
wherein the binder includes a (meth)acryl-based binder (5) including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof,
the filler includes an organic filler (4) and an inorganic filler (3),
the organic filler (4) includes a cross-linked polymer filler, and
the inorganic filler (3) includes one or more of a first inorganic filler, which has an average particle size D50 ranging from 50 nm to 250 nm and is cubic, and a second inorganic filler, which has an average particle size D50 ranging from 100 nm to 350 nm and is amorphous.

2. The separator of claim 1, wherein, with respect to 100 mol% of the (meth)acryl-based binder:
the first structural unit is included in an amount ranging from 30 mol% to 65 mol%,
the second structural unit is included in an amount ranging from 1 mol% to 20 mol%, and
the third structural unit is included in an amount ranging from 20 mol% to 65 mol%.

3. The separator of claim 1 or 2, wherein the first structural unit is represented by any one or more of Chemical Formulas 1 to 3,
the second structural unit is represented by Chemical Formula 4, and
the third structural unit is represented by any one or more of Chemical Formulas 5 to 7: 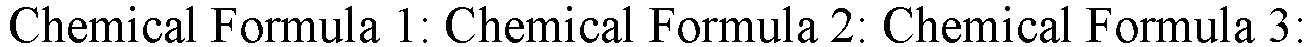 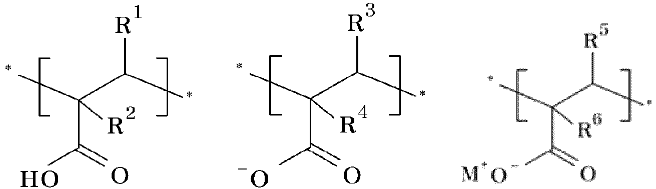 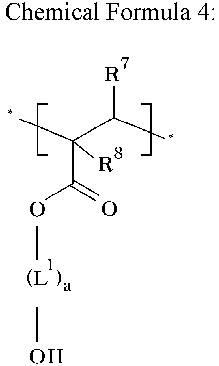 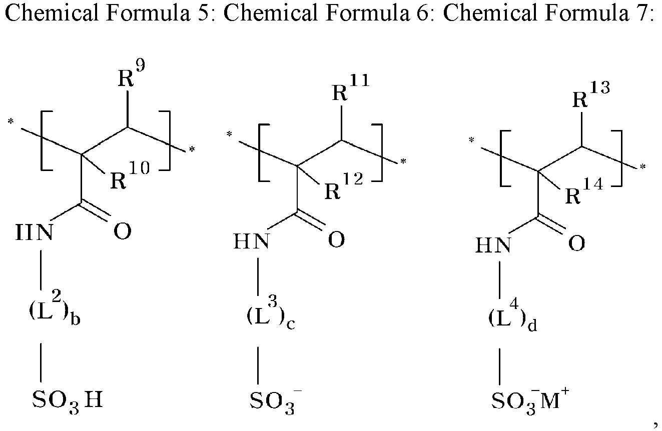
in Chemical Formulas 1 to 7,
R¹ to R¹⁴ each independently comprises hydrogen or a C1 to C10 alkyl group,
L¹ to L⁴ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, a, b, c, and d are each independently an integer ranging from 0 to 2, and
M comprises an alkali metal,
wherein "substitution" indicates that hydrogen is substituted with a substituent selected from of the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group (-NO₂), a cyano group (-CN), an amino group (-NRR') (here, R and R' are each independently hydrogen or a C1 to C6 alkyl group), a sulfobetaine group (-RR'N+(CH₂)ₙSO₃-, n is a natural number from 1 to 10), a carboxybetaine group (-RR'N+(CH₂)ₙCOO-, n is a natural number from 1 to 10) (here, R and R' are each independently a C1 to C20 alkyl group), an azido group (-N₃), an amidino group (-C(=NH)NH₂), a hydrazino group (-NHNH₂), a hydrazono group (=N(NH₂)), a carbamoyl group (-C(O)NH₂), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group (-SO₃H) or a salt thereof (-SO₃M, here, M denotes an organic or inorganic cation), and a phosphate group (-PO₃H₂) or a salt thereof (-PO₃MH or -PO₃M₂, here, M denotes an organic or inorganic cation)

4. The separator of any one of the preceding claims, wherein a mass ratio of the (meth)acryl-based binder and the organic filler is in a range of 1:1 to 1: 10.

5. The separator of any one of the preceding claims, wherein the organic filler comprises a cross-linked polymethyl methacrylate filler.

6. The separator of any one of the preceding claims, wherein a mass ratio of the (meth)acryl-based binder and the one or more of the first inorganic filler and the second inorganic filler is in a range of 1:10 to 1:50.

7. The separator of any one of the preceding claims, wherein at least one or more of the first inorganic filler and the second inorganic filler comprises at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, and boehmite.

8. The separator of any one of the preceding claims, wherein, among 100 parts by weight of the organic filler, and the one or more of the first inorganic filler and the second inorganic filler in the coating layer, the organic filler and the one or more of the first inorganic filler and the second inorganic filler are included in an amount of 10 to 80 parts by weight: 20 to 90 parts by weight.

9. The separator of any one of the preceding claims, wherein the coating layer further comprises an adhesive binder.

10. The separator of claim 9, wherein the adhesive binder comprises one or more of another (meth)acryl-based binder and a fluorine-based binder.

11. The separator of claim 10, wherein:
the (meth)acryl-based binder comprises a particle having a core-shell structure,
the core includes a (meth)acryl-based binder comprising a structural unit derived from (meth)acrylic acid or (meth)acrylate, and
the shell comprises a binder having a structural unit derived from a monomer including a polymerizable unsaturated group.

12. The separator of claim 10, wherein the fluorine-based binder comprises a vinylidene fluoride-derived unit, and one or more of units derived from chlorotrifluoroethylene, trifluoroethylene, hexafluoropropylene, ethylene tetrafluoride, and an ethylene monomer.

13. The separator of claim 10, wherein a weight ratio of the (meth)acryl-based binder and the adhesive binder in the coating layer is in a range of 1:0.1 to 1:3.

14. The separator of any one of the preceding claims, wherein the coating layer (2) has a thickness ranging from 0.5 µm to 2 µm.

15. A rechargeable lithium battery (100) comprising:
a positive electrode (10);
a negative electrode (20); and
the separator (30) of any one of the preceding claims between the positive electrode (10) and the negative electrode (20).
